# NEUE EUROPÄISCHE PATENTSCHRIFT

(11) **EP 2 514 958 B2**
(45) Veröffentlichungstag und Bekanntmachung des Hinweises auf die Entscheidung über den Einspruch: **26.09.2018**
(45) Hinweis auf die Patenterteilung: 11.03.2015
(21) Anmeldenummer: 12163196.4
(22) Anmeldetag: 04.04.2012
(51) Int. Cl.: F02M 31/125, F02M 37/22, B01D 29/21, B01D 27/08, B01D 35/00, B01D 35/18

(54) **Kraftstofffilter für eine Brennkraftmaschine**
Fuel filter for a combustion engine
Filtre de carburant pour un moteur à combustion interne

(30) Priorität: 19.04.2011 DE 102011018233
(43) Veröffentlichungstag der Anmeldung: 24.10.2012
(73) Patentinhaber: MANN + HUMMEL GMBH, 71638 Ludwigsburg (DE)
(72) Erfinder: Wildermuth, Andreas, 71672 Marbach (DE); Mack, Klaus, 74239 Hardthausen (DE); Gessner, Klaus, 75417 Mühlacker (DE)
(74) Vertreter: Kohler Schmid Möbus Patentanwälte

(56) Entgegenhaltungen:
- EP-A1- 1 101 519
- EP-A2- 0 943 796
- DE-A1- 3 538 282
- DE-A1- 3 716 142
- DE-A1- 3 724 410
- DE-A1- 4 430 471
- DE-A1- 10 023 649
- DE-A1- 19 601 760

## Beschreibung

### Technisches Gebiet

Die Erfindung betrifft einen Kraftstofffilter für Kraftstoff, insbesondere Dieselkraftstoff, insbesondere einen Inline-Kraftstofffilter, einer Brennkraftmaschine insbesondere eines Kraftfahrzeugs.

### Stand der Technik

Bei einem vom Markt her bekannten Kraftstofffilter für Dieselkraftstoff ist in Strömungsrichtung des zu filtrierenden Kraftstoffes vor einem Filterelement eine Heizeinrichtung vorgesehen. Mit der Heizeinrichtung wird der Kraftstoff erwärmt, bevor er dem Filterelement zugeführt wird. Auf diese Weise wird verhindert, dass ein Strömungswiderstand im Filterelement bedingt durch niedere Kraftstofftemperaturen so ansteigt, dass dies zu Störungen beim Betrieb der Brennkraftmaschine führen kann.

Die DE 100 23 649 A1 offenbart ein mit einer Heizeinrichtung versehenes Kraftstofffilter für Kraftfahrzeuge mit einem langgestreckten, zylindrischen Filtergehäuse und ein darin angeordnetes ringförmiges, radial durchströmtes Ringfilterelement. Eine Heizeinrichtung ist über eine an der Zulaufstirnseite des Ringfilterelementes lösbar vorgesehene, vom gesamten zuzuführenden Kraftstoff durchströmte Steckverbindung mit einer mit dem Filtergehäuse verbunden.

In der EP 0 943 796 A2 wird ein Flüssigkeitsfilter zum Reinigen von Dieselkraftstoff vorgeschlagen, dessen Gehäuse in Vollkunststoffausführung aus einem becherförmigen Unterteil und einem decklförmigen Oberteil besteht, die durch einen Schnellverschluss leicht voneinander lösbar sind und einen austauschbaren Sternfiltereinsatz aufnehmen. Das becherförmige Unterteil weist einen unterhalb des Filtereinsatzes liegenden Sockelabschnitt auf, an dem außen ein Zulaufanschluss angeordnet ist und der innen einen Wasserspeicherraum aufnimmt, der von einem Zuströmkanal und von einem Abströmkanal durchdrungen ist, über welche Kanäle eine am Boden des Sockelabschnitts angebaute Heizeinrichtung dem Filtereinsatz vorgeschaltet ist.

Aus der DE 37 24 410 A1 ist ein elektrisch beheizbarer Kraftstoff-Filter mit einem aus wenigstens zwei lösbar dichtend miteinander verbundenen Gehäuseteilen bestehenden Filtergehäuse bekannt, mit einem Kraftstoffeinlass und einem Kraftstoffauslass und einem mit einem im Filtergehäuse zwischen Einlass und Auslass angeordneten Filtereinsatz und mit wenigstens einem elektrisch betreibbaren Heizelement.

Die DE 44 30 471 A1 schlägt eine Bauweise eines Flüssigkeitsfilters mit eingebautem Druckregler für Kraftstoff aus Kunststoff vor, wobei die Gehäuseteile lösbar miteinander verbunden sind, so dass das Filterelement für sich alleine ausgetauscht werden kann.

Der DE 196 01 760 A1 ist ein Druckregelventil zu entnehmen, das als in ein Gehäuse eines Kraftstofffilters einschraubbares Anschraubteil ausgebildet ist.

Der Erfindung liegt die Aufgabe zugrunde, einen Kraftstofffilter der eingangs genannten Art zu gestalten, bei dem eine Heizeinrichtung und ein Filterelement trennbar voneinander verbunden sind, das möglichst kompakt aufgebaut ist und bei dem einfach und zuverlässig der zugeführte Kraftstoff in Strömungsrichtung vor dem Filterelement erwärmt werden kann.

### Offenbarung der Erfindung

Diese Aufgabe wird erfindungsgemäß gelöst mit einem Filtergehäuse mit wenigstens einem Einlass für zu reinigenden Kraftstoff und wenigstens einem Auslass für gereinigten Kraftstoff, in dem ein Filterelement angeordnet ist, das den wenigstens einen Einlass dicht von dem wenigstens einen Auslass trennt, und mit einem Heizmodul zur Erwärmung des zu reinigenden Kraftstoffs mit einem Heizmodulgehäuse, das trennbar mit dem Filtergehäuse verbunden ist.

Erfindungsgemäß ist eine Heizeinrichtung für den Kraftstoff in ein Heizmodul integriert, das trennbar mit dem Filtergehäuse verbunden ist. Das Heizmodul kann einfach insbesondere zu Wartungszwecken von dem Filtergehäuse getrennt werden. Je nach Bauart des Filtergehäuses kann das Filtergehäuse komplett mit dem Filterelement einfach ausgetauscht werden. Es kann aber auch ein aus dem Filtergehäuse entnehmbares Wechselfilterelement vorgesehen sein, welches nach Öffnen des Filtergehäuses einfach ausgetauscht werden kann. Das Heizmodul kann als Lebensbauteil ausgelegt sein. Bei dem Kraftstofffilter kann es sich vorteilhafterweise um ein Inline-Kraftstofffilter handeln, der einfach insbesondere in einer Kraftstoffleitung zu einer Kraftstoffpumpe der Brennkraftmaschine angeordnet werden kann. Es kann aber auch ein Kraftstofffilter vorgesehen sein, der in einer anderen Kraftstoffleitung, insbesondere eine Nebenleitung oder einer Bypass-Leitung, angeordnet werden kann. Das Heizmodul und das Filtergehäuse mit dem Filterelement können separat vorgefertigt werden und bei der Endmontage einfach zusammengesetzt werden. Der modulare Aufbau ermöglicht, dass unterschiedliche Kombinationen von Filtergehäusen mit Filterelementen und Heizmodulen einfach realisiert werden können.

Erfindungsgemäß weist das Filtergehäuse einen Gehäusetopf auf, der mit dem Heizmodulgehäuse verschlossen ist. Das Heizmodulgehäuse wirkt also als Deckel für den Gehäusetopf. Dies hat den Vorteil, dass das Filtergehäuse keinen separaten Deckel benötigt. Auf diese Weise werden der Bauteilaufwand und der Montageaufwand verringert. Ferner wird die Wartung des Kraftstofffilters vereinfacht. Zu Wartungszwecken, insbesondere zum Austausch oder zur Reinigung des Filterelementes, müssen lediglich das Filtergehäuse und das Heizmodul getrennt werden. Das Filterelement kann direkt aus dem Filtergehäuse entnommen werden. Ferner kann die Bauform des Heizmoduls freier gestaltet werden. Der zur Verfügung stehende Bauraum für eine Fluidverbindung zwischen dem Heizmodulgehäuse und dem Gehäusetopf ist nicht durch einen Deckel des Filtergehäuses begrenzt. Er kann so großzügiger gestaltet werden. Ein Heizmodulauslass für den erwärmten Kraftstoff erstreckt sich über den gesamten Querschnitt des Gehäusetopfs. Auf diese Weise wird die Kraftstoffströmung stromabwärts des Heizmoduls verbessert. Der erwärmte Kraftstoff kann gleichmäßig der Rohseite des Filterelements zu strömen.

Das Heizmodulgehäuse ist mittels einer Drehverbindung mit dem Filtergehäuse verbunden. Eine Drehverbindung, insbesondere eine Schraubverbindung, kann einfach realisiert werden. Sie kann einfach verbunden und wieder gelöst werden. Schraubverbindungen haben eine hohe axiale Stabilität.

Erfindungsgemäß ist der Heizmodulauslass ein Heizmodulauslassstutzen mit einem ersten Gewinde einer Schraubverbindung und der Einlass des Filtergehäuses ist ein Einlassstutzen mit einem zweiten Gewinde der Schraubverbindung, welches mit dem ersten Gewinde zusammenwirkt, und das Heizmodulgehäuse ist mittels der Schraubverbindung mit dem Filtergehäuse trennbar verbunden. Die Schraubverbindung kann einfach durch einen entsprechend ausgestalteten Heizmodulauslass und einen entsprechenden Einlass des Filtergehäuses realisiert werden. Auf diese Weise sind keine separaten Schraubverbindungselemente erforderlich. Der Heizmodulauslass und der Einlass können sich dabei über den gesamten Querschnitt des Filtergehäuses erstrecken. Auf diese Weise kann der erwärmte Kraftstoff gleichmäßig vom Heizmodulauslass über den Einlass zu einer Rohseite des Filterelements strömen. Alternativ kann vorgesehen sein, dass das Filtergehäuse über einen Deckel mit dem Einlassstutzen verfügt.

Erfindungsgemäß sind das Heizmodulgehäuse und/oder das Filtergehäuse aus Kunststoff. Bauteile aus Kunststoff können einfach hergestellt werden. Insbesondere können Kunststoffbauteile gegossen, gespritzt oder gezogen werden. Kunststoffbauteile können einfach, auch in komplexen Formen, ausgestaltet werden. Kunststoffbauteile können auch einfach mit anderen Bauteilen aus Kunststoff verbunden, insbesondere verschweißt oder verklebt werden. Kunststoffbauteile können einfach entsorgt oder recycelt werden. Mit Kunststoffbauteilen können einfach thermisch und/oder elektrische isolierend realisiert werden. Die elektrische Isolation ist insbesondere bei der Verwendung eines Heizmoduls mit einer elektrischen Heizeinrichtung von Vorteil. Bauteile aus Kunststoff können einfach robust und beständig gegenüber Umwelteinflüssen, insbesondere Korrosion, ausgestaltet werden. Falls das Heizmodulgehäuse und das Filtergehäuse aus Kunststoff sind, können unterschiedliche Ausdehnung, insbesondere hervorgerufen durch Temperaturschwankungen, vermieden werden. Dies erhöht die Dichtheit der Verbindung zwischen den beiden Bauteilen, so dass kein Kraftstoff aus dem System entweichen kann. Bauteile aus Kunststoff können mit einem im Vergleich zu Metallbauteilen geringeren Gewicht realisiert werden. Sie können außerdem elastisch ausgestaltet sein.

Vorteilhafterweise kann das Filtergehäuse aus Kunststoff sein und an seiner Außenseite kann eine Halteeinrichtung aus Kunststoff einstückig befestigt sein. Dies hat den Vorteil, dass keine separate Halteinrichtung erforderlich ist. Auf diese Weise wird der Bauteilaufwand verringert. Außerdem wird der Montageaufwand verringert, da kein separater Arbeitsgang erforderlich ist, um die Halteeinrichtung an dem Filtergehäuse zu befestigen. Die Halteeinrichtung kann einfach gemeinsam mit dem Filtergehäuse aus Kunststoff gefertigt, insbesondere geformt, gespritzt oder gezogen, werden.

Erfindungsgemäß weist das Heizmodulgehäuse einen Heizmoduleinlass für den zu erwärmenden Kraftstoff und einen Heizmodulauslass für den erwärmten Kraftstoff auf und der Heizmodulauslass ist mit dem Einlass des Filtergehäuses verbunden. Der Heizmoduleinlass kann fest mit einem Zuleitungsabschnitt einer Kraftstoffleitung der Brennkraftmaschine verbunden sein. Der Heizmodulauslass kann so ausgestaltet sein, dass er automatisch beim Zusammenbau des Heizmoduls und des Filtergehäuses mit dem Einlass des Filtergehäuses verbunden wird und beim Trennen der beiden Bauteile automatisch von dem Einlass getrennt wird. Auf diese Weise ist kein separater Arbeitsgang zum Trennen des Heizmodulauslasses vom Einlass erforderlich.

In einer besonders vorteilhaften Ausführungsform des Kraftstofffilters sind der Heizmoduleinlassstutzen für den zu reinigenden Kraftstoff und der Auslass für den gereinigten Kraftstoff an der gegenüberliegenden Seite sowie eine Anschlusseinheit für elektrische Leitungen zur Speisung der elektrischen Heizeinrichtung in axialer Richtung des Kraftstofffilters angeordnet sind. So ist eine einfache Montage der Anschlussleitungen und Steckkontakte in Axialrichtung des Kraftstofffilters möglich.

In einer vorteilhaften Ausführungsform des Kraftstofffilter ist das Heizmodul auf der Rohseite des Kraftstofffilters und nicht im Filtergehäuse verbaut ist, so dass das Heizmodul baulich getrennt ist von den Bauteilen auf der Reinseite des Filters.

In einer besonders vorteilhaften Ausführungsform des Kraftstofffilters beträgt die geometrische Länge des Kraftstofffilters mindestens das 2,5fache, insbesondere in etwa das 3,5-fache, des Durchmessers des Kraftstofffilters, wobei die Maße sich auf den Durchmesser des Gehäusetopfes ohne Halteeinrichtungen bezieht.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch:
- Figur 1: einen Kraftstofffilter mit einem Heizmodul zum Erwärmen des zu reinigenden Kraftstoffes und einem Filterelement;
- Figur 2: einen Längsschnitt des Kraftstofffilters aus der Figur 1;
- Figur 3: einen Längsschnitt eines nicht beanspruchten Kraftstofffilters gemäß einem zweiten Ausführungsbeispiel, welcher ähnlich ist zu dem Kraftstofffilter aus den Figuren 1 und 2.

In den Figuren sind gleiche Bauteile mit gleichen Bezugszeichen versehen.

### Ausführungsform(en) der Erfindung

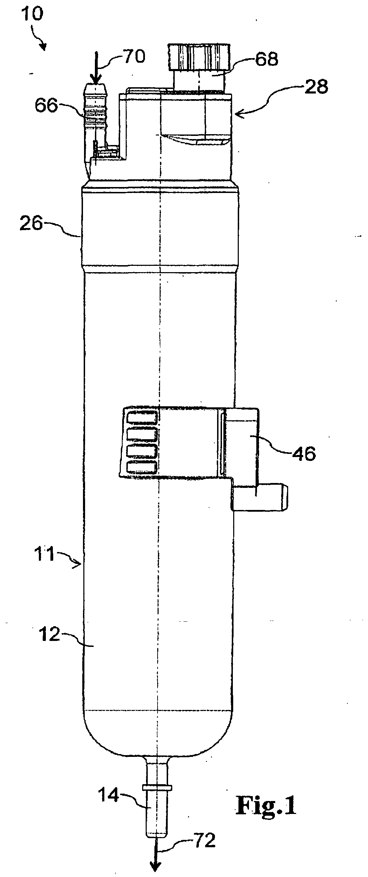

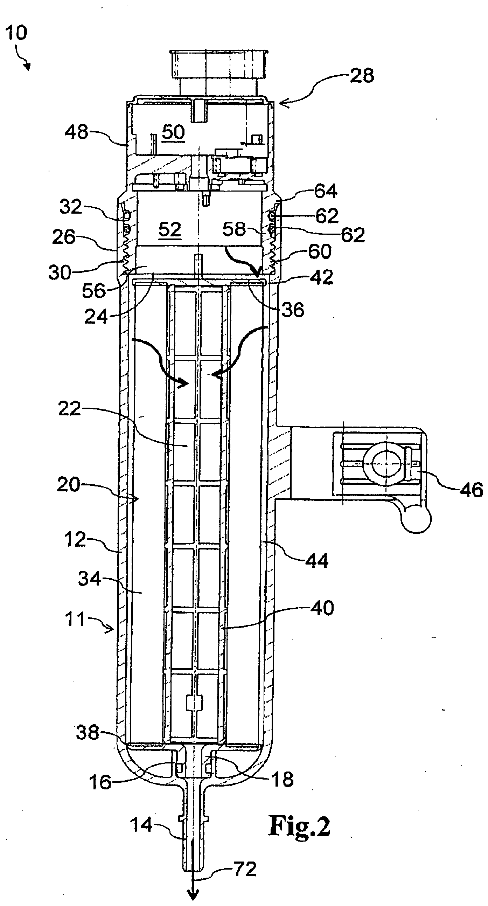

In den Figuren 1 und 2 ist ein Kraftstofffilter 10 für Dieselkraftstoff einer Brennkraftmaschine eines Kraftfahrzeuges gemäß einem ersten Ausführungsbeispiel gezeigt. Der Kraftstofffilter 10 ist als Inline-Kraftstofffilter ausgeführt für den Einbau in einer Kraftstoffleitung zu einer Kraftstoffpumpe der Brennkraftmaschine.

Der Kraftstofffilter 10 verfügt über ein Filtergehäuse 11 mit einem rohrförmigen Filtertopf 12 aus Kunststoff. Zentral im Boden des Filtertopfs 12 ist ein Auslassstutzen 14 für gereinigten Kraftstoff angeordnet. Der Auslassstutzen 14 ist außerhalb des Filtertopfs 12 mit einem nicht gezeigten Leitungsabschnitt der Kraftstoffleitung verbunden, der zur Kraftstoffpumpe führt. Auf der Innenseite ist am Boden des Filtertopfs 12 ein Aufnahmekragen 16 koaxial zu Auslassstutzen 14 angeordnet. In dem Aufnahmekragen 16 steckt ein Einsteckstutzen 18 eines Filterelementes 20. Der Einsteckstutzen 18 verbindet den Auslassstutzen 14 mit einem Innenraum 22 des Filterelementes 20. An der Umfangsseite des Einsteckstutzens 18 ist eine Ringdichtung angeordnet, die den Einsteckstutzen 18 gegen die radial innere Umfangsseite des Aufnahmekragens 16 abgedichtet.

Auf der dem Boden gegenüberliegenden Stirnseite ist der Filtertopf 12 offen. Die offene Stirnseite weist einen Einlass 24 für den zu reinigenden Kraftstoff auf. Im Bereich des Einlasses 24 ist die Umfangswand des Filtertopfs 12 radial nach außen abgestuft. Die Umfangswand bildet dort einen Anschlussbereich 26 für ein Heizmodul 28, welches weiter unten noch näher erläutert wird. An der radial inneren Umfangsseite weist der Anschlussbereich 26 ein Innengewinde 30 auf. Axial zwischen dem Innengewinde 30 und dem freien Rand des Filtertopfs 12 ist die radial innere Umfangsseite des Anschlussbereiches 26 als Dichtfläche 32 ausgebildet.

Bei dem Filterelement 20 handelt es sich um ein Rundfilterelement. Es verfügt über ein Filtermedium 34, beispielsweise ein Filtervlies, das zickzackförmig zu einem umfangsmäßig geschlossenen Filterbalg gefaltet ist. An den Stirnseiten des Filtermediums 34 sind eine einlassseitige Endscheibe 36 und eine auslassseitige Endscheibe 38 jeweils dicht mit dem Filtermedium 34 verbunden. Zwischen der einlassseitigen Endscheibe 36 und der auslassseitigen Endscheibe 38 erstreckt sich im Innenraum 22 des Filterelements 20 ein skelettartiges, in radialer Richtung fluiddurchlässiges Stützrohr 40.

An der auslassseitigen Endscheibe 38 ist der Einsteckstutzen 18 angeordnet. Die auslassseitige Endscheibe 38 liegt mit ihrem radial äußeren Rand eng an der Innenmantelfläche des Filtertopfs 12 an.

Die einlassseitige Endscheibe 36 ist durchgängig geschlossen. Sie befindet sich in der Nähe des Anschlussbereiches 26 außerhalb des Innengewindes 30 auf der dem Boden des Filtertopfs 12 zugewandten Seite des Innengewindes 30. Der Außendurchmesser der einlassseitigen Endscheibe 36 ist kleiner als der Innendurchmesser des Filtertopfs 12 dort, sodass zwischen den einlassseitigen Endscheibe 36 und der Innenmantelfläche des Filtertopfs 12 ein Ringspalt 42 zum Durchlass des zu reinigenden Kraftstoffes realisiert ist.

Zwischen der radial äußeren Umfangsseite des Filtermediums 34 und der Innenmantelfläche des Filtertopfs 12 befindet sich ein Einlassringraum 44. Insgesamt trennt das Filterelement 20 den Einlass 24 dicht von dem Auslassstutzen 14.

An der äußeren Umfangsseite des Filtertopfs 12 ist eine Haltelasche 46 aus Kunststoff einstückig befestigt. Die Haltelasche 46 dient der Befestigung des Kraftstofffilters 10 an einer entsprechenden Haltevorrichtung beispielsweise im Motorraum des Kraftfahrzeuges oder an der Brennkraftmaschine.

Das Heizmodul 28 verfügt über ein Heizmodulgehäuse 48 aus Kunststoff. In dem Heizmodulgehäuse 48 befindet sich ein Elektronikraum 50 zur Aufnahme der Heizelektronik und ein Auslassvolumen 52, das mit einem Heizmoduleinlassstutzen 66 verbunden ist. Im Elektronikraum 50 nimmt in hier nicht weiter interessierender Weise die Elektronik einer elektrischen Heizeinrichtung auf. Die Heizeinrichtung befindet sich in Kontakt mit dem Kraftstoff. Das Auslassvolumen 52 ist zu einer Stirnseite des Heizmodulgehäuses 48 hin offen und bildet dort einen Heizmodulauslass 56 für den erwärmten Kraftstoff. Der Heizmodulauslass 56 erstreckt sich über nahezu den gesamten Querschnitt Auslassvolumens 52. Der Heizmodulauslass 56 ist so großflächig mit dem Einlass 24 verbunden. Der Elektronikraum 50 ist nicht notwendigerweise in das Heizmodulgehäuse integriert sondern kann in einer alternativen Ausführung auch als separates Bauteil ausgebildet sein, das mit dem Heizmodul verbunden ist.

Die Außenmantelfläche des Heizmodulgehäuses 48 ist im Bereich des Auslassvolumens 52 rotationssymmetrisch. Das Heizmodulgehäuse 48 verfügt dort über einen Anschlussabschnitt 58, der in den Anschlussbereich 26 des Filtertopfs 12 passt. Der Anschlussabschnitt 58 weist im Bereich seines freien Randes ein Außengewinde 60 auf, welches dem Innengewinde 30 des Filtertopfs 12 entspricht und in dieses eingeschraubt werden kann. Hinter dem Außengewinde 60 sind in der radial äußeren Umfangsseite des Anschlussabschnitts 58 hintereinander zwei umfangsmäßige Dichtungsnuten angeordnet, in denen entsprechende Ringdichtungen 62 platziert sind. Die Ringdichtungen 62 liegen in der in der Figur 2 gezeigten Endposition des Heizmoduls 28 dicht an der Dichtfläche 32 des Filtertopfs 12 an. In axialer Richtung hinter den Dichtungsnuten verfügt der Anschlussabschnitt 58 über eine Stufe 64, die sich radial nach außen erstreckt. Die Stufe 64 dient als Anschlag für den freien Stirnrand des Anschlussbereichs 26 des Filtertopfs 12.

An dem Elektronikraum 50 vorbei führt ein Kanal von dem in der Figur 1 gezeigten Heizmoduleinlassstutzen 66 zur nicht gezeigten Heizeinrichtung. Der Heizmoduleinlassstutzen 66 ist außerhalb des Heizmodulgehäuses 48 mit einem nicht gezeigten Zuleitungsabschnitt der Kraftstoffleitung verbunden und dient der Zuführung des Kraftstoffes in den Kraftstofffilter. Außerdem verfügt das Heizmodul 28 über eine Anschlusseinheit 68 für elektrische Leitungen zur Speisung der elektrischen Heizeinrichtung des Heizmoduls 28. Darüber hinaus kann an das Heizmodul 28 auch einen Temperatursensor aufweisen, welcher über die Anschlusseinheit 68 mit entsprechenden Signalleitungen verbunden werden kann.

Zur Herstellung des Kraftstofffilters 10 wird der Filtertopf 12 mit der Haltelasche 46 aus Kunststoff hergestellt, beispielsweise geformt, gegossen, gespritzt oder gezogen. Das Heizmodulgehäuse 48 wird ebenfalls aus Kunststoff hergestellt. Die Heizeinrichtung des Heizmoduls 28 wird in das Heizmodulgehäuse 48 montiert.

Das separat vorgefertigte Filterelement 20 wird mit seinem Einsteckstutzen 18 voran in axialer Richtung in den Filtertopf 12 gesteckt und in dem Aufnahmekragen 16 gelagert.

Anschließend wird das Heizmodul 28 mit dem Anschlussabschnitt 58 voran in das Innengewinde 30 des Filtertopfs 12 geschraubt. In der in den Figuren 1 und 2 dargestellten Endposition liegt die Stufe 64 des Heizmodulgehäuses 48 am Stirnrand des Filtertopfs 12 an. Der Heizmodulauslass 56 ist so automatisch mit dem Einlass 24 des Filtertopfs 12 verbunden.

Der Kraftstofffilter 10 kann mittels der Haltelasche 46 an der Brennkraftmaschine oder an einem fahrzeugfesten Rahmen des Kraftfahrzeuges befestigt werden. Der Heizmoduleinlassstutzen 66 und der Auslassstutzen 14 werden mit den entsprechenden Leitungsabschnitten der Kraftstoffleitung verbunden. Elektrische Anschlüsse beispielsweise Motorsteuerung werden mit der Anschlusseinheit 68 verbunden.

Beim Betrieb des Kraftstofffilters 10 wird der Kraftstoff, in der Figur 1 angedeutet durch einen Pfeil 70, aus der Kraftstoffleitung über den Heizmoduleinlassstutzen 66 der Heizeinrichtung zugeführt. Dort wird der Kraftstoff erwärmt. Der erwärmte Kraftstoff fließt dem Auslassvolumen 52 zu. Im Auslassvolumen 52 verteilt sich der erwärmte Kraftstoff über den gesamten Querschnitt. Dies führt zu einer Strömungsberuhigung. Vom Auslassvolumen 52 gelangt der erwärmte Kraftstoff in den Einlassringraum 44. Dadurch, dass der Heizmodulauslass 56 sich über den gesamten Querschnitt des Auslassvolumens 52 erstreckt, dessen Außendurchmesser nahezu so groß ist wie der Durchmesser des Einlassringraums 44, kann der Kraftstoff gleichmäßig umfangsmäßig dem Einlassringraum 44 zugeführt werden.

Der erwärmte, zu reinigende Kraftstoff durchströmt das Filtermedium 34 von der Rohseite radial außen zur Reinseite radial innen. Im Filtermedium 34 wird der Kraftstoff gefiltert. Der gefilterte Kraftstoff strömt durch die Öffnungen des Stützrohrs 40 und gelangt in den Innenraum 22.

Vom Innenraum 22 strömt der gereinigte Kraftstoff über den Einsteckstutzen 18 in der auslassseitigen Endscheibe 38 in den Auslassstutzen 14 des Filtertopfs 12. Von dort gelangt der gereinigte Kraftstoff, in der Figur 1 und 2 angedeutet durch einen Pfeil 72, in die Kraftstoffleitung und zur Kraftstoffpumpe.

Zu Wartungszwecken, beispielsweise zum Austausch oder zur Reinigung des Filterelements 20, wird das Heizmodul 28 aus dem Anschlussbereich 26 des Filtertopfs 12 herausgeschraubt. Anschließend ist das Filterelement 20 frei zugänglich und kann in axialer Richtung aus dem Filtertopf 12 herausgezogen werden. Es kann gereinigt werden oder gegen ein neues Filterelement ausgetauscht werden.

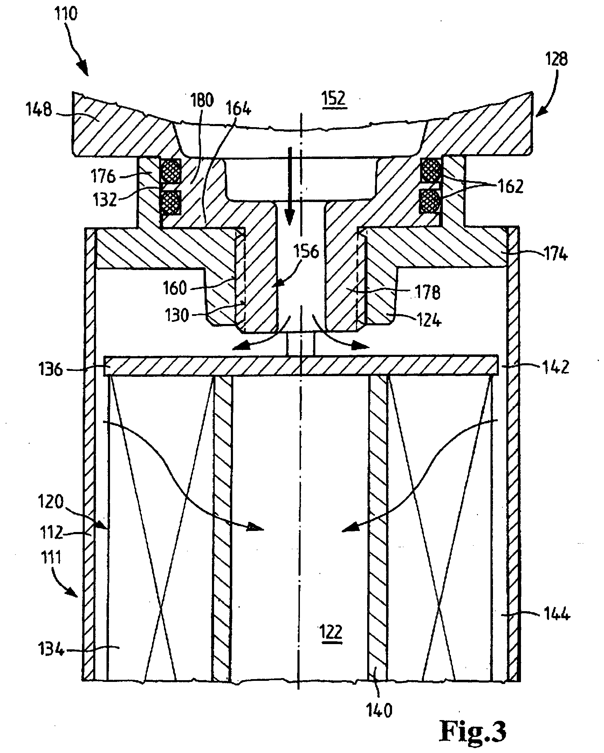

In der Figur 3 ist eine Detailansicht eines nicht beanspruchten Ausführungsbeispiels eines Kraftstofffilters 110 gezeigt. Diejenigen Elemente, die zu denen des ersten Ausführungsbeispiels aus den Figuren 1 und 2 ähnlich sind, sind mit denselben Bezugszeichen zuzüglich 100 versehen. Das zweite Ausführungsbeispiel unterscheidet sich von dem ersten Ausführungsbeispiel dadurch, dass das Filtergehäuse 111 einen Gehäusedeckel 174 aufweist. Der Gehäusedeckel 174 verfügt zentral über einen Einlassstutzen 124 für den zu reinigenden Kraftstoff. Der Einlassstutzen 124 erstreckt sich in axialer Richtung im Inneren des Filtergehäuses 111. Der Einlassstutzen 124 weist ein Innengewinde 130 auf.

An der Außenseite des Filtergehäuses 111 verfügt der Gehäusedeckel 174 über einen ringförmigen Aufnahmekragen 176, welcher sich koaxial zum Einlassstutzen 124 und zum Innengewinde 130 erstreckt.

Das Heizmodulgehäuse 148 umfasst einen Heizmodulauslassstutzen 156, welcher in axialer Richtung abgestuft ist. Der Heizmodulauslassstutzen 156 verfügt im Bereich seiner freien Stirnseite über einen Gewindeabschnitt 178 mit einem Außengewinde 160, das zu dem Innengewinde 130 des Einlassstutzens 124 passt. Ein radial nach außen abgestufter Dichtungsabschnitt 180 liegt mit seiner radial äußeren Umfangsseite an der radial inneren Umfangsseite des Aufnahmekragens 176 an. In der radial äußeren Umfangsseite des Dichtungsabschnittes 180 sind zwei Dichtungsnuten mit entsprechenden Ringdichtungen 162 angeordnet. Die Ringdichtungen 162 liegen in der, in der Figur 3 gezeigten Endposition des Kraftstofffilters 110 dicht an der radial inneren Mantelfläche des Aufnahmekragens 176 an. Eine Stufe 164 zwischen dem Dichtungsabschnitt 180 und dem Gewindeabschnitt 178 liegt in der Endposition am Gehäusedeckel 174 an und dient so als Anschlag.

Zur Montage des Heizmoduls 128 am Filtergehäuse 111 wird das Heizmodulgehäuse 148 mit dem Heizmodulauslassstutzen 156 in den Einlassstutzen 124 eingesteckt und eingeschraubt. Das Auslassvolumen 152 des Heizmoduls 128 ist so automatisch mit dem Einlassringraum 144 des Kraftstofffilters 110 verbunden. Die Trennung des Heizmoduls 128 vom Filtergehäuse 111 erfolgt durch Herausschrauben des Heizmodulgehäuses 148 aus dem Einlassstutzen 124. Der Betrieb des Kraftstofffilters 110 erfolgt analog zum Betrieb des Kraftstofffilters 10 gemäß dem ersten Ausgangsbeispiel.

Bei allen oben beschriebenen Ausführungsbeispielen eines Kraftstofffilters 10; 110 sind unter anderem folgende Modifikationen möglich:
Die Erfindung ist nicht beschränkt auf Kraftstofffilter 10; 110 für Brennkraftmaschinen von Kraftfahrzeugen. Sie kann auch bei andersartigen Brennkraftmaschinen, beispielsweise bei Industriemotoren, eingesetzt werden.

Die Erfindung ist auch nicht beschränkt auf Inline-Kraftstofffilter. Sie kann auch bei Kraftstofffiltern eingesetzt werden, die in andersartigen Kraftstoffleitungen, beispielsweise in Nebenleitungen oder Bypass-Leitungen, der Brennkraftmaschine, angeordnet sind.

Das Filtermedium 34; 134 kann statt von radial außen nach innen auch von radial innen nach außen durchströmt werden. In diesem Fall ist der Einlass 24 beziehungsweise der Einlassstutzen 124 mit dem Innenraum 22; 122 des Filterelementes 20; 120 verbunden.

Anstelle der Schraubverbindung mit den Innengewinden 30; 130 und den Außengewinden 60; 160, kann auch eine andersartige Dreh- und/oder Steckverbindung, beispielsweise eine Bajonettverbindung oder eine Rastverbindung, vorgesehen sein.

Bei dem in den Figuren 1 und 2 gezeigten ersten Ausführungsbeispiel kann das Heizmodulgehäuse 48 statt in den Filtertopf 12 eingeschraubt auch auf diesen aufgeschraubt sein. Der Anschlussabschnitt 58 des Heizmodulgehäuses 48 kann hierzu mit einem Innengewinde ausgestattet sein und der Anschlussbereich 26 des Filtertopfs 12 kann mit einem entsprechenden Außengewinde ausgestattet sein.

Der Filtertopf 12; 112 kann statt aus Kunststoff auch aus Metall, beispielsweise aus Aluminium, sein.

Das Heizmodulgehäuse 48; 148 kann statt aus Kunststoff auch aus Metall, beispielsweise aus Aluminium, sein.

Anstelle des austauschbaren Filterelementes 20; 120 kann auch ein Kraftstofffilter 10; 110 mit einem fest in dem Filtertopf 12; 112 angeordneten Filterelement verwendet werden. In diesem Fall wird das Filtergehäuse 11; 111 einen Filterwechsel komplett mit dem Filterelement ausgetauscht. Das Heizmodul 28; 128 hingegen kann beispielsweise als Lebensbauteil ausgestaltet sein und erneut verwendet werden.

Das Filtermedium 34; 134 kann statt in Form eines zickzackförmig gefalteten Filterbalgs auch andersartig realisiert sein. Es kann beispielsweise ein umfangsmäßig geschlossener Filterschaum oder eine glatte Filterschicht aus einer oder mehreren Filterlagen sein.

Das Filterelement 20; 120 kann statt als Rundfilterelement auch ein andersartiges, beispielsweise eckig oder ovales, Filterelement ausgestaltet sein.

## Patentansprüche

1. Inline-Kraftstofffilter (10) für Kraftstoff, insbesondere Dieselkraftstoff, einer Brennkraftmaschine, insbesondere eines Kraftfahrzeugs, mit einem Filtergehäuse (11) mit wenigstens einem Einlass (24) für zu reinigenden Kraftstoff und wenigstens einem Auslass (14) für gereinigten Kraftstoff, in dem ein Filterelement (20) angeordnet ist, das den wenigstens einen Einlass (24) dicht von dem wenigstens einen Auslass (14) trennt, und mit einem Heizmodul (28) zur Erwärmung des zu reinigenden Kraftstoffs mit einem Heizmodulgehäuse (48), das trennbar mit dem Filtergehäuse (11) verbunden ist,
**dadurch gekennzeichnet, dass**
das Heizmodulgehäuse (48) mittels einer Drehverbindung (30, 60) mit dem Filtergehäuse (11) verbunden Ist, wobei das Heizmodulgehäuse (48) und/oder das Filtergehäuse (11) aus Kunststoff sind,
wobei das Heizmodulgehäuse (48) einen Heizmoduleinlass (66) für den zu erwärmenden Kraftstoff und einen Heizmodulauslass (56) für den erwärmten Kraftstoff aufweist und der Heizmodulauslass (56) mit dem Einlass (24) des Filtergehäuses (11) verbunden ist,
wobei der Heizmodulauslass (56) ein Heizmodulauslassstutzen (56) ist mit einem ersten Gewinde (60) einer Schraubverbindung und der Einlass des Filtergehäuses (11) ein Einlassstutzen (26) ist mit einem zweiten Gewinde (30) der Schraubverbindung, welches mit dem ersten Gewinde (60) zusammenwirkt, und das Heizmodulgehäuse (48) mittels der Schraubverbindung mit dem Filtergehäuse (11) trennbar verbunden ist, wobei das Filtergehäuse (11) einen Gehäusetopf (12) aufweist, der mit dem Heizmodulgehäuse (48) verschlossen ist, wobei der Heizmodulauslass (56) für den erwärmten Kraftstoff sich über den gesamten Querschnitt des Gehäusetopfs erstreckt.

2. Inline-Kraftstofffilter (10) nach Anspruch 1, **dadurch gekennzeichnet, dass** das Filtergehäuse (11) aus Kunststoff ist und an seiner Außenseite am Gehäusetopf (12) eine Halteeinrichtung (46) aus Kunststoff einstückig befestigt ist.

3. Inline-Kraftstofffilter (10) nach Anspruch 1, **dadurch gekennzeichnet, dass** eine Halteeinrichtung (46) an dem Heizmodul (28) aus Kunststoff einstückig befestigt ist.

4. Inline-Kraftstofffilter (10) nach einem der vorigen Ansprüche, **dadurch gekennzeichnet, dass** ein Heizmoduleinlassstutzen (66) für zu reinigenden Kraftstoff und der Auslass (14) für gereinigten Kraftstoff und eine Anschlusseinheit (68) für elektrische Leitungen zur Speisung einer elektrischen Heizeinrichtung In axialer Richtung des Kraftstofffilters angeordnet sind.

5. Inline-Kraftstofffilter (10) nach einem der vorigen Ansprüche, **dadurch gekennzeichnet, dass** das Heizmodul (28) auf der Rohseite des Kraftstofffilters und nicht im Filtergehäuse (11) verbaut ist, wobei das Heizmodul (28) baulich getrennt ist von den reinseitigen Bauteilen des Kraftstofffilters.

6. Inline-Kraftstofffilter (10) nach einem der vorigen Ansprüche, **dadurch gekennzeichnet, dass** die geometrische Länge des Kraftstofffilters mindestens das 2,5-fache des Durchmessers des Kraftstofffilters beträgt.

## Claims

1. Inline fuel filter (10) for fuel, in particular diesel fuel, of an internal combustion engine, in particular of a motor vehicle, having a filter housing (11) having at least one inlet (24) for fuel which is intended to be cleaned and at least one outlet (14) for cleaned fuel, in which there is arranged a filter element (20) which separates the at least one inlet (24) from the at least one outlet (14) in a sealed manner, and having a heating module (28) which is for heating the fuel which is intended to be cleaned and which has a heating module housing (48) which is connected to the filter housing (11) in a separable manner,
**characterised in that**
the heating module housing (48) is connected to the filter housing (11) by means of a rotary connection (30, 60), wherein the heating module housing (48) and/or the filter housing (11) are of plastics material,
wherein the heating module housing (48) has a heating module inlet (66) for the fuel which is intended to be heated and a heating module outlet (56) for the heated fuel, and the heating module outlet (56) is connected to the inlet (24) of the filter housing (11),
wherein the heating module outlet (56) is a heating module outlet connection piece (56) having a first thread (60) of a screw connection and the inlet of the filter housing (11) is an inlet connection piece (26) having a second thread (30) of the screw connection which cooperates with the first thread (60), and the heating module housing (48) is connected by means of the screw connection to the filter housing (11) in a separable manner, wherein the filter housing (11) has a housing pot-like member (12) which is closed with the heating module housing (48), wherein the heating module outlet (56) for the heated fuel extends over the entire cross-section of the housing pot-like member.

2. Inline fuel filter (10) according to claim 1, **characterised in that** the filter housing (11) is of plastics material and a retention device (46) of plastics material is secured in an integral manner at the outer side thereof on the housing pot-like member (12).

3. Inline fuel filter (10) according to claim 1, **characterised in that** a retention device (46) is secured in an integral manner to the heating module (28) of plastics material.

4. Inline fuel filter (10) according to any one of the preceding claims, **characterised in that** a heating module inlet connection piece (66) for fuel which is intended to be cleaned and the outlet (14) for cleaned fuel and a connection unit (68) for electrical lines for supplying an electrical heating device are arranged in an axial direction of the fuel filter.

5. Inline fuel filter (10) according to any one of the preceding claims, **characterised in that** the heating module (28) is installed at the unprocessed side of the fuel filter and not in the filter housing (11), wherein the heating module (28) is structurally separate from the clean-side components of the fuel filter.

6. Inline fuel filter (10) according to any one of the preceding claims, **characterised in that** the geometric length of the fuel filter is at least 2.5 times the diameter of the fuel filter.

## Revendications

1. Filtre à carburant en ligne (10) pour le carburant, en particulier le carburant diesel, d'un moteur à combustion interne, en particulier d'un véhicule automobile, comportant un boîtier de filtre (11) avec au moins une entrée (24) pour le carburant à purifier et au moins une sortie (14) pour le carburant purifié, dans lequel est disposé un élément filtrant (20) qui sépare de manière étanche ladite au moins une entrée (24) de ladite au moins une sortie (14), et comportant un module de chauffage (28) pour chauffer le carburant à purifier, muni d'un boîtier de module de chauffage (48) qui est relié de manière séparable au boîtier de filtre (11),
**caractérisé en ce que**
le boîtier de module de chauffage (48) est relié au boîtier de filtre (11) au moyen d'une liaison tournante (30, 60), le boîtier de module de chauffage (48) et/ou le boîtier de filtre (11) étant en matière plastique,
dans lequel le boîtier de module de chauffage (48) présente une entrée de module de chauffage (66) pour le carburant à chauffer et une sortie de module de chauffage (56) pour le carburant chauffé, et la sortie de module de chauffage (56) est reliée à l'entrée (24) du boîtier de filtre (11),
dans lequel la sortie de module de chauffage (56) est une tubulure de sortie de module de chauffage (56) avec un premier filetage (60) d'un raccord vissé et l'entrée du boîtier de filtre (11) est une tubulure d'entrée (26) avec un deuxième filetage (30) du raccord vissé, lequel coopère avec le premier filetage (60), et le boîtier de module de chauffage (48) est relié de manière séparable au boîtier de filtre (11) au moyen du raccord vissé, le boîtier de filtre (11) présentant un pot de boîtier (12) qui est fermé par le boîtier de module de chauffage (48), la sortie de module de chauffage (56) pour le carburant chauffé s'étendant sur toute la section transversale du pot de boîtier.

2. Filtre à carburant en ligne (10) selon la revendication 1, **caractérisé en ce que** le boîtier de filtre (11) est en matière plastique et un dispositif de retenue (46) en matière plastique est fixé d'un seul tenant au pot de boîtier (12) sur son côté extérieur.

3. Filtre à carburant en ligne (10) selon la revendication 1, **caractérisé en ce qu'**un dispositif de retenue (46) est fixé d'un seul tenant au module de chauffage (28) en matière plastique.

4. Filtre à carburant en ligne (10) selon l'une des revendications précédentes, **caractérisé en ce qu'**une tubulure d'entrée de module de chauffage (66) pour le carburant à purifier, la sortie (14) pour le carburant purifié et une unité de raccordement (68) pour des lignes électriques servant à alimenter un dispositif de chauffage électrique sont disposées dans la direction axiale du filtre à carburant.

5. Filtre à carburant en ligne (10) selon l'une des revendications précédentes, **caractérisé en ce que** le module de chauffage (28) est monté du côté carburant non purifié du filtre à carburant et non dans le boîtier de filtre (11), le module de chauffage (28) étant structurellement séparé des composants du côté carburant purifié du filtre à carburant.

6. Filtre à carburant en ligne (10) selon l'une des revendications précédentes, **caractérisé en ce que** la longueur géométrique du filtre à carburant est au moins de 2,5 fois le diamètre du filtre à carburant.
